# FASCICULE DE BREVET EUROPEEN

(11) **EP 0 749 857 B1**
(45) Date de publication et mention de la délivrance du brevet: **19.05.1999**
(21) Numéro de dépôt: 96110060.9
(22) Date de dépôt: 21.06.1996
(51) Int. Cl.: B60H 1/00

(54) **Dispositif de chauffage-ventilation de l'habitacle d'un véhicule automobile**
Vorrichtung zur Heizung, Lüftung eines Fahrzeuginnenraumes
Device for heating and ventilating the interior of a vehicle

(30) Priorité: 21.06.1995 FR 9507424
(43) Date de publication de la demande: 27.12.1996
(73) Titulaire: VALEO CLIMATISATION, 78321 La Verrière (FR)
(72) Inventeur: Loup, Didier, 78310 Maurepas (FR)
(74) Mandataire: Gamonal, Didier

(56) Documents cités:
- EP-A- 0 461 421
- DE-A- 4 305 253
- DE-C- 3 826 182
- FR-A- 2 719 809

## Description

L'invention concerne un dispositif de chauffage-ventilation de l'habitacle d'un véhicule automobile.

Elle concerne plus particulièrement un dispositif du type comprenant un boîtier qui délimite une entrée d'air frais, une zone de mixage en communication avec un conduit de dégivrage, avec un conduit d'aération et avec un conduit de chauffage, ainsi que des moyens pour alimenter la zone de mixage avec de l'air frais ou réchauffé, le dispositif comprenant en outre au moins un canal d'amenée d'air frais présentant une ouverture d'entrée qui communique avec l'entrée d'air frais et une ouverture de sortie qui débouche dans une chambre de sortie communiquant avec la zone de mixage, ladite chambre de sortie alimentant le conduit d'aération et le conduit de chauffage.

Un dispositif de chauffage-ventilation de ce type est connu par la Demande de brevet français No 94 05850 (FR-A-2 719 809) au nom de la Demanderesse.

Dans ce dispositif connu, la zone de mixage reçoit un air à température réglable qui est ensuite envoyé vers les conduits précités.

Le conduit de dégivrage est propre à envoyer un flux d'air vers au moins une buse dirigée vers au moins une des vitres du véhicule, notamment le pare-brise.

Le conduit d'aération est propre à diriger un flux d'air vers la tête des passagers, et cela par l'intermédiaire d'aérateurs prévus sur la planche de bord du véhicule.

Enfin, le conduit de chauffage, encore appelé "conduit-pieds", est propre à envoyer un flux d'air vers les pieds des passagers, et cela par l'intermédiaire d'au moins une buse débouchant vers le bas de l'habitacle.

Les conduits précités sont contrôlés sélectivement par des volets pour assurer différentes configurations de distribution, et cela de manière en soi connue.

Dans le dispositif selon la Demande de brevet français précitée, le canal d'amenée d'air frais permet d'envoyer une fraction d'air frais directement dans la chambre de sortie pour alimenter le conduit d'aération et/ou le conduit de mixage, sauf dans le cas où la zone de mixage reçoit de l'air à température maximale (position type "tout chaud").

La fraction d'air frais se mélange ainsi à l'air mixé provenant de la zone de mixage, ce qui permet d'alimenter la chambre de sortie avec un flux d'air à température inférieure à celle du flux d'air destiné au conduit de dégivrage.

Le dispositif selon la Demande de brevet précitée peut notamment adopter un mode de distribution "aération-pieds" dans lequel le conduit de dégivrage est fermé, tandis que la chambre de sortie alimente à la fois le conduit d'aération et le conduit de chauffage.

L'invention a notamment pour but de proposer des perfectionnements supplémentaires au dispositif précité.

Elle propose à cet effet un dispositif de chauffage-ventilation du type précité, dans lequel le canal d'amenée d'air frais est monté pivotant dans le boîtier entre une première position extrême et une seconde position extrême de manière que l'ouverture de sortie du canal soit dirigée vers un conduit choisi parmi le conduit de dégivrage, le conduit d'aération et le conduit de chauffage, et dans lequel des moyens d'actionnement sont prévus pour commander le pivotement du canal d'amenée d'air frais entre ses deux positions extrêmes.

On peut ainsi diriger préférentiellement le flux d'air frais issu de l'ouverture de sortie du canal d'amenée d'air frais soit vers le conduit de dégivrage, soit vers le conduit d'aération, soit vers le conduit de chauffage, en fonction de la configuration de confort souhaitée par l'utilisateur.

Dans une forme de réalisation préférée de l'invention, le canal d'amenée d'air frais est propre à diriger le flux d'air soit vers le conduit d'aération, soit vers le conduit de chauffage.

L'invention s'applique en particulier à un dispositif de chauffage-ventilation du type précité, dans lequel la chambre de sortie alimentée par la zone de mixage affecte une forme générale cylindrique et est munie d'un volet en deux parties propre à contrôler la répartition du flux d'air entre le conduit d'aération et le conduit de chauffage.

Conformément à l'invention, les moyens d'actionnement du canal d'amenée d'air frais sont opératoires pour faire pivoter ce canal d'amenée d'air frais lorsque ce volet en deux parties est dans une position dite "aération-pieds" dans laquelle il autorise l'admission d'air à la fois vers le conduit d'aération et vers le conduit de chauffage.

Ainsi, dans une telle position, le conduit d'aération et le conduit de chauffage reçoivent tous deux de l'air à température réglée provenant de la zone de mixage, et de plus le flux d'air frais alimenté par le canal d'amenée d'air frais peut être dirigé préférentiellement, soit vers le conduit d'aération, soit vers le conduit de chauffage.

L'invention s'applique également à un dispositif du type précité, qui comprend un volet de dégivrage propre à contrôler le conduit de dégivrage.

Selon l'invention, les moyens d'actionnement du canal d'amenée d'air frais sont opératoires pour faire pivoter le canal d'amenée d'air frais lorsque le volet de dégivrage ferme le conduit de dégivrage, et pour maintenir le canal d'amenée d'air frais dans sa première position extrême, lorsque le volet de dégivrage ouvre le conduit de dégivrage.

Selon une autre caractéristique de l'invention, le dispositif comprend un seul canal d'amenée d'air frais monté pivotant dans une région centrale du boîtier.

Avantageusement, le canal d'amenée d'air frais est rattaché à deux arbres coaxiaux qui traversent respectivement deux parois latérales du boîtier, l'un au moins des deux arbres étant couplé aux moyens d'actionnement du canal d'amenée d'air frais.

Ces moyens d'actionnement comprennent avantageusement une biellette dont une extrémité est calée en rotation sur l'un des deux arbres et dont l'autre extrémité est propre à être couplée à un câble de commande ou analogue.

Selon une autre caractéristique de l'invention, le canal d'amenée d'air frais est limité par une paroi de fond, une paroi supérieure et deux parois latérales pour définir une section transversale interne de forme sensiblement rectangulaire.

Avantageusement, cette section transversale diminue entre l'ouverture d'entrée et l'ouverture de sortie, ce qui permet d'accélérer le flux d'air frais issu du canal et de lui donner une direction privilégiée.

Selon une autre caractéristique de l'invention, le canal d'amenée d'air frais comprend une paroi déflectrice qui se rattache à la paroi supérieure à proximité de l'ouverture d'entrée pour favoriser l'admission d'air frais dans le canal plutôt que dans le conduit de dégivrage.

Dans la description qui suit, faite seulement à titre d'exemple, on se réfère aux dessins annexés, sur lesquels :
- la figure 1 est une vue en coupe transversale d'un dispositif de chauffage-ventilation selon l'invention;
- la figure 2 est une vue en coupe longitudinale, à échelle agrandie, du canal d'amenée d'air frais du dispositif de la figure 1;
- la figure 3 est une vue d'extrémité, du côté ouverture d'entrée, du canal d'amenée d'air frais de la figure 2; et
- la figure 4 est une vue analogue à celle de la figure 3 montrant le montage du canal d'amenée d'air frais dans le boîtier du dispositif de la figure 1.

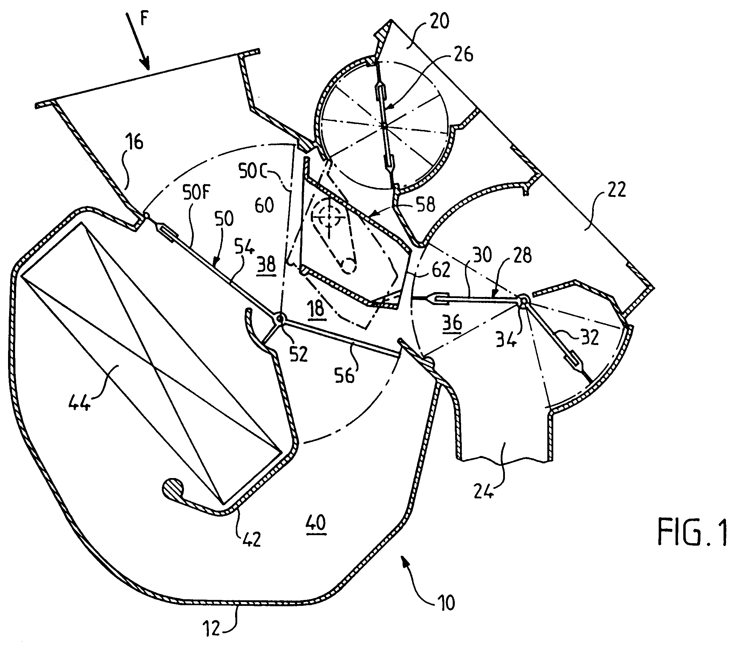

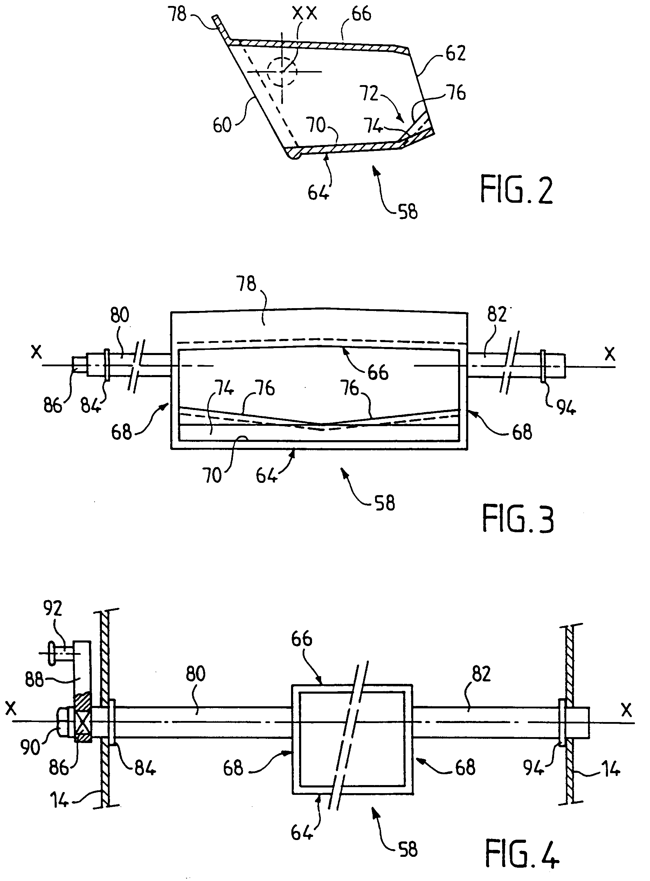

Le dispositif de chauffage-ventilation de la figure 1 comprend un boîtier 10 délimité principalement par une paroi 12 dont les génératrices sont parallèles entre elles et perpendiculaires au plan de la figure, ainsi que par deux parois latérales 14 (figure 4). Une entrée d'air frais 16 est délimitée dans le boîtier pour y amener (flèche F) un flux d'air pulsé, éventuellement climatisé, qui provient de l'extérieur de l'habitacle du véhicule ou qui est recirculé à partir de celui-ci.

Le boîtier 10 délimite par ailleurs une chambre de mixage 18 qui est en communication avec un conduit de dégivrage 20, un conduit d'aération 22 et un conduit de chauffage 24.

Le conduit de dégivrage 20 est contrôlé par un volet pivotant 26 et est propre à envoyer de l'air frais ou réchauffé vers au moins une buse (non représentée) située à proximité d'une vitre du véhicule, notamment du pare-brise.

Le conduit d'aération 22 est propre à envoyer un flux d'air frais ou réchauffé vers au moins un aérateur (non représenté) situé notamment sur la planche de bord du véhicule. Habituellement, on prévoit deux aérateurs centraux et deux aérateurs latéraux.

Le conduit de chauffage 24 (encore appelé "conduit-pieds") est propre à envoyer un flux d'air frais ou réchauffé vers au moins une buse (non représentée) située en partie inférieure de l'habitacle pour diriger cet air vers les pieds des passagers.

Les conduits 22 et 24 sont contrôlés par un volet de réglage commun 28 constitué de deux parties 30 et 32 reliées à un axe 34 en formant entre elles un angle d'environ 120°.

Ce volet 38 est propre à se déplacer à l'intérieur d'une chambre 36 de forme générale cylindrique qui communique avec la zone de mixage 18 et qui est propre à alimenter les conduits 22 et 24.

Le dispositif 10 délimite en outre une branche de transmission d'air frais 38 interposée entre l'entrée d'air frais 16 et la zone de mixage 18, ainsi qu'une branche de réchauffage d'air 40 qui a sensiblement la forme d'un U et qui communique, d'une part avec l'entrée d'air 16, et d'autre part avec la zone de mixage 18.

La forme en U de la branche 40 est délimitée par une partie de la paroi 12 et par une paroi interne 42. Dans la branche de réchauffage d'air 40 est logé un échangeur de chaleur 44 muni de deux tubulures (non représentées) servant respectivement à l'admission et à l'évacuation d'un fluide chaud, avantageusement le fluide de refroidissement du moteur du véhicule.

A la jonction entre les deux branches 38 et 40 est prévu un volet de mixage 50 monté à pivotement autour d'un axe 52 et formé de deux parties 54 et 56 s'étendant de part et d'autre de cet axe.

Le volet 50 peut prendre une première position extrême 50C ou "position chaud" (représentée en trait interrompu), dans laquelle tout le flux d'air passe par la chambre de réchauffage d'air 40, et donc par l'échangeur de chaleur 44 en y étant réchauffé. Il peut prendre également une seconde position extrême 50F ou "position froid" (représentée en trait plein) dans laquelle tout le flux d'air passe par la branche de transmission d'air frais 38 sans traverser l'échangeur de chaleur 44.

Le volet de mixage 50 peut en outre prendre toute position intermédiaire entre les positions 50C et 50F pour répartir le flux d'air entre les deux branches et régler ainsi la température de l'air qui parvient à la zone de mixage 18 et qui est ensuite distribué entre les conduits 20, 22 et 24.

Le volet 26 est représenté dans une position de fermeture, tandis que le volet 28 est représenté dans une position dite "aération-pieds" dans laquelle le flux d'air provenant de la zone de mixage 18 pénètre dans la chambre 36 en se partageant en deux flux : un flux dirigé vers le conduit d'aération 22 et un flux dirigé vers le conduit de chauffage 24.

Sur la figure 1, on a également représenté en trait interrompu deux autres positions du volet 28, à savoir une position "aération" dans laquelle tout le flux d'air est dirigé vers le conduit d'aération 22, et une position "pieds" dans laquelle tout le flux d'air est dirigé vers le conduit de chauffage 24.

Le dispositif tel que décrit jusqu'à présent est de structure en elle-même connue, notamment d'après la Demande de brevet français No 94 05850 (FR-A-2 719 809) déjà citée.

Conformément à l'invention, le dispositif comprend en outre un canal d'amenée d'air frais 58 qui est logé dans le boîtier 10 et qui présente une ouverture d'entrée 60 communiquant avec l'entrée d'air frais 16 et une ouverture de sortie 62 débouchant vers la chambre de sortie 36 qui alimente les conduits 22 et 24.

L'entrée 60 du canal 58 est située près de l'entrée 16, dans la zone d'évolution du volet de mixage 50, de manière à être fermée lorsque le volet de mixage est dans la position 50C.

Le canal d'amenée d'air frais 58 (figures 2 à 4) est limité par une paroi de fond 64, une paroi supérieure 66 et deux parois latérales 68 pour définir une section transversale intérieure de forme sensiblement rectangulaire.

Le canal 58 affecte ainsi la forme d'un boîtier ouvert à ses deux extrémités, qui est en forme de dépouille depuis l'ouverture d'entrée 60 jusqu'à l'ouverture de sortie 62.

La paroi de fond 64 comprend un premier tronçon 70 qui s'étend à partir de l'ouverture d'entrée 60 et qui est sensiblement parallèle à la paroi 66. Ce premier tronçon 70 se rattache à un second tronçon 72 qui s'étend jusqu'à l'ouverture de sortie 62 en se rapprochant progressivement de la paroi supérieure.

Le second tronçon 72 comprend successivement un premier plan incliné 74 rattaché au premier tronçon 70 puis un second plan incliné 76 en forme de V très ouvert rattaché au premier plan incliné et aboutissant à l'ouverture de sortie 62.

Il en résulte que la section transversale interne du canal 58 diminue entre l'ouverture d'entrée et l'ouverture de sortie, ce qui permet d'accélérer le flux d'air frais circulant dans le canal et de lui donner une direction préférentielle.

Le canal 58 comprend en outre une paroi déflectrice 78 (figures 2 et 3), qui se rattache à la paroi supérieure 66 à proximité de l'ouverture d'entrée 60 et qui s'étend sur toute la largeur du canal. Cette paroi est destinée à favoriser l'admission d'air frais dans le canal 58 plutôt que dans le conduit de dégivrage 20. Comme on le voit sur la figure 1, cette paroi déflectrice 78 se situe en effet près de l'entrée du conduit de dégivrage 20.

Le canal 58 est monté pivotant dans une région centrale du boîtier 10. A cet effet, le canal 58 est rattaché, par ses deux parois latérales 68, respectivement à deux arbres coaxiaux 80 et 82 qui traversent respectivement les deux parois latérales 14 du boîtier. L'arbre 80 s'appuie contre la face interne d'une paroi 14 par l'intermédiaire d'une rondelle d'appui 84. Il comporte une partie 86 à section carrée qui s'étend à l'extérieur du boîtier et qui reçoit une biellette 88, laquelle est maintenue en position par une vis 90. L'une des extrémités de la biellette 88 est calée sur l'arbre 80, tandis que son autre extrémité porte un maneton 92 qui permet de faire pivoter le canal 58 à l'intérieur du boîtier. L'autre arbre 82 s'appuie à l'intérieur de l'autre paroi latérale 14 par une rondelle d'appui 94.

Le canal 58 peut pivoter autour d'un axe XX, défini par les arbres 80 et 82, entre une première position extrême (représentée en trait plein sur la figure 1), dans laquelle l'ouverture de sortie 62 du canal est dirigée vers le conduit d'aération 22 et une seconde position extrême (représentée en trait interrompu sur la figure 1) dans laquelle l'ouverture de sortie 62 est dirigée vers le conduit de chauffage 24.

L'amplitude du pivotement du canal est de l'ordre de 15 à 20°. Normalement, le canal peut être seulement placé dans l'une ou l'autre des deux positions extrêmes précitées, bien qu'il entre également dans le cadre de l'invention de prévoir une variante dans laquelle le canal pourrait prendre au moins une position intermédiaire.

Les moyens d'actionnement du canal 58 sont opératoires pour ne faire pivoter le canal que lorsque le volet 28 est dans sa position "aération-pieds" telle que représentée en trait plein sur la figure 1. Dans cette position, à la fois le conduit d'aération 22 et le conduit de chauffage 24 sont alimentés en air mixé. On peut alors diriger l'ouverture de sortie du canal, soit vers le conduit d'aération 22, soit vers le conduit de chauffage 24. Dans le premier cas, les aérateurs reçoivent un air à température plus basse que les buses de sortie-pieds. Dans le second cas, c'est la situation inverse qui est obtenue.

La forme particulière de la paroi de fond 64 du canal 58 forme une sorte d'aube déflectrice qui permet de diriger l'air froid vers la chambre 36.

Les moyens d'actionnement couplés au canal d'amenée d'air frais 58 sont opératoires pour faire pivoter ce canal lorsque le volet de dégivrage 26 est dans une position de fermeture, comme montré à la figure 1.

Par contre, lorsque le volet de dégivrage 26 ouvre le conduit de dégivrage 20, le canal d'amenée d'air frais 58 ne peut pivoter et reste alors bloqué dans sa première position extrême, c'est-à-dire celle dans laquelle l'ouverture de sortie 62 est dirigée vers le conduit d'aération 22.

Bien entendu, l'invention n'est pas limitée à la forme de réalisation décrite précédemment à titre d'exemple et est susceptible de nombreuses variantes.

## Revendications

1. Dispositif de chauffage-ventilation de l'habitacle d'un véhicule automobile, comprenant un boîtier (10) qui délimite une entrée d'air frais (16), une zone de mixage (18) en communication avec un conduit de dégivrage (20), avec un conduit d'aération (22) et avec un conduit de chauffage (24), et des moyens (44, 50) pour alimenter la zone de mixage (18) sélectivement avec de l'air froid ou réchauffé, le dispositif comprenant en outre au moins un canal d'amenée d'air frais (58) présentant une ouverture d'entrée (60) qui communique avec l'entrée d'air frais (16) et une ouverture de sortie (62) qui débouche dans une chambre de sortie (36) communiquant avec la zone de mixage (18), ladite chambre de sortie (36) alimentant le conduit d'aération (22) et le conduit de chauffage (24),
le canal d'amenée d'air frais (58) étant monté pivotant dans le boîtier (10) entre une première position extrême et une seconde position extrême de manière que l'ouverture de sortie (62) du canal (58) soit dirigée vers un conduit choisi parmi le conduit de dégivrage (20), le conduit d'aération (22) et le conduit de chauffage (24), et des moyens d'actionnement (88) étant prévus pour commander le pivotement du canal (58) entre ses deux positions extrêmes.

2. Dispositif selon la revendication 1, dans lequel la chambre de sortie (36) alimentée par la zone de mixage (18) affecte une forme générale cylindrique et est munie d'un volet (28) en deux parties propre à contrôler la répartition du flux d'air entre le conduit d'aération (22) et le conduit de chauffage (24), caractérisé en ce que les moyens d'actionnement du canal d'amenée d'air frais (58) sont opératoires pour faire pivoter ce canal lorsque le volet (28) en deux parties est dans une position dite "aération-pieds" dans laquelle il autorise l'admission du flux d'air à la fois vers le conduit d'aération (22) et vers le conduit de chauffage (24).

3. Dispositif selon l'une des revendications 1 et 2, comprenant un volet de dégivrage (26) propre à contrôler le conduit de dégivrage (20), caractérisé en ce que les moyens d'actionnement du canal d'amenée d'air frais (58) sont opératoires pour faire pivoter le canal d'amenée d'air frais lorsque le volet de dégivrage (26) ferme le conduit de dégivrage (20) et pour maintenir le canal d'amenée d'air frais dans sa première position extrême lorsque le volet de dégivrage (26) ouvre le conduit de dégivrage (20).

4. Dispositif selon l'une des revendications 1 à 3, caractérisé en ce qu'il comprend un seul canal d'amenée d'air frais (58) monté pivotant dans une région centrale du boîtier (10).

5. Dispositif selon la revendication 4, caractérisé en ce que le canal d'amenée d'air frais (58) est rattaché à deux arbres coaxiaux (81, 82) qui traversent respectivement deux parois latérales (14) du boîtier (10) et en ce que l'un au moins des deux arbres est couplé aux moyens d'actionnement (88) du canal d'amenée d'air frais (58).

6. Dispositif selon la revendication 5, caractérisé en ce que les moyens d'actionnement comprennent une biellette (88) dont une extrémité est calée en rotation sur l'un (81) des deux arbres et dont l'autre extrémité est propre à être couplée à un câble de commande ou analogue.

7. Dispositif selon l'une des revendications 1 à 6, caractérisé en ce que le canal d'amenée d'air frais (58) est limité par une paroi de fond (64), une paroi supérieure (66) et deux parois latérales (68) pour définir une section transversale interne de forme sensiblement rectangulaire.

8. Dispositif selon la revendication 7, caractérisé en ce que la section transversale interne du canal d'amenée d'air frais (58) diminue entre l'ouverture d'entrée (60) et l'ouverture de sortie (62).

9. Dispositif selon l'une des revendications 7 et 8, caractérisé en ce que la paroi de fond (64) comprend un premier tronçon (70) qui s'étend à partir de l'ouverture d'entrée (70) en étant sensiblement parallèle à la paroi supérieure (66) et un second tronçon (72) qui s'étend jusqu'à l'ouverture de sortie (62) en se rapprochant progressivement de la paroi supérieure (66).

10. Dispositif selon la revendication 9, caractérisé en ce que le second tronçon (72) comprend successivement un premier plan incliné (74) rattaché au premier tronçon (70) puis un second plan incliné (76) en forme de V très ouvert rattaché au premier plan incliné et aboutissant à l'ouverture de sortie (62).

11. Dispositif selon l'une des revendications 7 à 10, caractérisé en ce que le canal d'amenée d'air frais (58) comprend une paroi déflectrice (78) qui se rattache à la paroi supérieure (66) à proximité de l'ouverture d'entrée (60) pour favoriser l'admission d'air frais dans le canal (58) plutôt que dans le conduit de dégivrage (20).

## Claims

1. Device for the heating and ventilation of a motor vehicle passenger compartment, comprising a casing (10) which delimits a fresh air inlet (16), a mixing area (18) in communication with a defrosting conduit (20), with a ventilation conduit (22) and with a heating conduit (24), and means (44, 50) for supplying the mixing area (18) with fresh or heated air, the device also comprising at least one duct (58) for bringing in fresh air having an inlet opening (60) which communicates with the fresh air inlet (16) and an outlet opening (62) which opens out into an outlet chamber (36) communicating with the mixing area (18), the said outlet chamber (36) supplying the ventilation conduit (22) and the heating conduit (24),
the fresh air supply duct (58) being mounted so as to pivot in the casing (10) between a first extreme position and a second extreme position so that the outlet opening (62) of the duct (58) is directed towards a conduit chosen from amongst the defrosting conduit (20), the ventilation conduit (22) and the heating conduit (24), and actuation means (88) being provided for controlling the pivoting of the duct (58) between its two extreme positions.

2. Device according to Claim 1, in which the outlet chamber (36) supplied by the mixing area (18) takes a cylindrical shape overall and is provided with a two-part flap (28) able to control the distribution of the air flow between the ventilation conduit (22) and the heating conduit (24), characterised in that the means of actuating the fresh air feed duct (58) are operative in order to cause this duct to pivot when the two-part flap (28) is in the so-called "ventilation/feet" position in which it allows the admission of the air flow both to the ventilation conduit (22) and to the heating conduit (24).

3. Device according to one of Claims 1 and 2, comprising a defrosting flap (26) able to control the defrosting conduit (20), characterised in that the means of actuating the fresh air feed duct (58) are operative in order to cause the fresh air feed duct to pivot when the defrosting flap (26) closes the defrosting conduit (20) and to maintain the fresh air feed duct in its first extreme position when the defrosting flap (26) opens the defrosting conduit (20).

4. Device according to one of Claims 1 to 3 characterised in that it comprises a single fresh air feed duct (58) mounted so as to pivot in a central region of the casing (10).

5. Device according to Claim 4, characterised in that the fresh air feed duct (58) is attached to two coaxial shafts (81, 82) which pass respectively through two side walls (14) of the casing (10) and in that at least one of the two shafts is coupled to the means (88) of actuating the fresh air feed duct (58).

6. Device according to Claim 5, characterised in that the actuation means comprises a linkage (88), one end of which is fixed in rotation to one (81) of the two shafts and the other end of which is able to be coupled to a control cable or the like.

7. Device according to one of Claims 1 to 6, characterised in that the fresh air feed duct (58) is delimited by a base wall (64), a top wall (66) and two side walls (68) in order to define an internal transverse section with a substantially rectangular shape.

8. Device according to Claim 7, characterised in that the internal transverse section of the fresh air feed duct (58) decreases between the inlet opening (60) and the outlet opening (62).

9. Device according to one of Claims 7 and 8, characterised in that the base wall (64) comprises a first portion (70) which extends from the inlet opening (70) whilst being substantially parallel to the top wall (66), and a second portion (72) which extends as far as the outlet opening (62) whilst progressively approaching the top wall (66).

10. Device according to Claim 9, characterised in that the second portion (72) comprises successively a first inclined plane (74) attached to the first portion (70) and then a second inclined plane (76) in the form of a very open V attached to the first inclined plane and ending at the outlet opening (62).

11. Device according to one of Claims 7 to 10, characterised in that the fresh air feed duct (58) comprises a deflector wall (78) which is attached to the top wall (66) close to the inlet opening (60) in order to favour the admission of fresh air into the duct (58) rather than into the defrosting conduit (20).

## Patentansprüche

1. Vorrichtung zur Heizung und Lüftung des Fahrgastraums eines Kraftfahrzeugs, umfassend ein Gehäuse (10), das einen Frischlufteinlaß (16) begrenzt, einen Mischbereich (18), der mit einer Entfrostungsleitung (20), mit einer Belüftungsleitung (22) und mit einer Heizungsleitung (24) in Verbindung steht, sowie Mittel (44, 50), um dem Mischbereich (18) wahlweise Kaltluft oder Warmluft zuzuführen, wobei die Vorrichtung außerdem mindestens einen Frischluftzufuhrkanal (58) umfaßt, der eine Einlaßöffnung (60), die mit dem Frischlufteinlaß (16) in Verbindung steht, und eine Auslaßöffnung (62) aufweist, die in eine Auslaßkammer (36) mündet, die mit dem Mischbereich (18) in Verbindung steht, wobei die besagte Auslaßkammer (36) der Belüftungsleitung (22) und der Heizungsleitung (24) Luft zuführt, wobei der Frischluftzufuhrkanal (58) im Gehäuse (10) schwenkbar zwischen einer ersten Endposition und einer zweiten Endposition gelagert ist, dergestalt daß die Auslaßöffnung (62) des Kanals (58) zu einer Leitung gerichtet ist, die zwischen der Entfrostungsleitung (20), der Belüftungsleitung (22) und der Heizungsleitung (24) ausgewählt wird, und wobei Betätigungsmittel (88) vorgesehen sind, um das Schwenken des Kanals (58) zwischen seinen beiden Endpositionen zu betätigen.

2. Vorrichtung nach Anspruch 1, bei der die durch den Mischbereich (18) gespeiste Auslaßkammer (36) eine allgemein zylindrische Form aufweist und mit einer zweiteiligen Klappe (28) versehen ist, die die Verteilung des Luftstroms zwischen der Belüftungsleitung (22) und der Heizungsleitung (24) kontrollieren kann, **dadurch gekennzeichnet,** daß die Betätigungsmittel des Frischluftkanals (58) die Funktion haben, diesen Frischluftzufuhrkanal zu verschwenken, wenn sich die zweiteilige Klappe (28) in einer als "Belüftung-Fußraum" bezeichneten Position befindet, in der sie die Zufuhr des Luftstroms sowohl zur Belüftungsleitung (22) als auch zur Heizungsleitung (24) zuläßt.

3. Vorrichtung nach einem der Ansprüche 1 und 2, umfassend eine Entfrostungsklappe (26), um die Entfrostungsleitung (20) zu kontrollieren , **dadurch gekennzeichnet,** daß die Betätigungsmittel des Frischluftzufuhrkanals (58) die Funktion haben, den Frischluftzufuhrkanal zu verschwenken, wenn die Entfrostungsklappe (26) die Entfrostungsleitung (20) schließt, und den Frischluftzufuhrkanal in seiner ersten Endposition zu halten, wenn die Entfrostungsklappe (26) die Entfrostungsleitung (20) öffnet.

4. Vorrichtung nach einem der Ansprüche 1 bis 3, **dadurch gekennzeichnet,** daß sie einen einzigen Frischluftzufuhrkanal (58) umfaßt, der schwenkbar in einem Mittelbereich des Gehäuses (10) gelagert ist.

5. Vorrichtung nach Anspruch 4 , **dadurch gekennzeichnet,** daß der Frischluftzufuhrkanal (58) an zwei koaxiale Wellen (81, 82) angefügt ist, die durch zwei Seitenwände (14) des Gehäuses (10) hindurchgehen, und daß mindestens eine der beiden Wellen mit den Betätigungsmitteln (88) des Frischluftzufuhrkanals (58) verbunden ist.

6. Vorrichtung nach Anspruch 5 , **dadurch gekennzeichnet,** daß die Betätigungsmittel eine Gelenkstange (88) umfassen, deren erstes Ende drehfest an einer (81) der beiden Wellen angebracht ist und deren anderes Ende mit einem Betätigungsseilzug oder ähnlichem verbunden werden kann.

7. Vorrichtung nach einem der Ansprüche 1 bis 6, **dadurch gekennzeichnet,** daß der Frischluftzufuhrkanal (58) durch eine Bodenwand (64), eine obere Wand (66) und zwei Seitenwände (68) begrenzt wird, um einen Innenquerschnitt mit einer in etwa rechteckigen Form zu definieren.

8. Vorrichtung nach Anspruch 7 , **dadurch gekennzeichnet,** daß sich der Innenquerschnitt des Frischluftzufuhrkanals (58) zwischen der Einlaßöffnung (60) und der Auslaßöffnung (62) verringert.

9. Vorrichtung nach einem der Ansprüche 7 und 8, **dadurch gekennzeichnet,** daß die Bodenwand (64) ein erstes Teilstück (70), das sich von der Einlaßöffnung (70) aus erstreckt und in etwa parallel zur oberen Wand (66) verläuft, und ein zweites Teilstück (72) umfaßt, das sich bis zur Auslaßöffnung (62) erstreckt, indem es sich allmählich an die obere Wand (66) annähert.

10. Vorrichtung nach Anspruch 9, **dadurch gekennzeichnet,** daß das zweite Teilstück (72) hintereinander eine an das erste Teilstück (70) angefügte erste geneigte Fläche (74) und daran anschließend eine zweite geneigte Fläche (76) in Form eines sehr weit geöffneten V umfaßt, die sich an die erste geneigte Fläche anschließt und zur Auslaßöffnung (62) führt.

11. Vorrichtung nach einem der Ansprüche 7 bis 10, **dadurch gekennzeichnet,** daß der Frischluftzufuhrkanal (58) eine Umlenkwand (78) umfaßt, die sich an die obere Wand (66) in der Nähe der Einlaßöffnung (60) anschließt, um den Frischlufteinlaß in den Frischluftzufuhrkanal (58) statt in die Entfrostungsleitung (20) zu begünstigen.
